# EUROPÄISCHE PATENTANMELDUNG

(11) **EP 3 238 653 A1**
(43) Veröffentlichungstag der Anmeldung: **01.11.2017**
(21) Anmeldenummer: 16167416.3
(22) Anmeldetag: 28.04.2016
(51) Int. Cl.: A61C 1/12, A61C 1/14, A61C 1/18, A61C 1/07

(54) **MEDIZINISCHES ODER DENTALES WINKELSTÜCK**

(71) Anmelder: W & H Dentalwerk Bürmoos GmbH, 5111 Bürmoos (AT)
(72) Erfinder: WAGNER, Hannes, 5023 Salzburg (AT); HÖRMANN, Udo, 5411 Oberalm (AT)
(74) Vertreter: Benda, Ralf

(57) **Zusammenfassung**

Es sind Winkelstücke (1-6, 40), insbesondere für endodontische Anwendungen, mit mechanischen Getriebevorrichtung (15) beschrieben, wobei ein Getriebeelement (17) der mechanischen Getriebevorrichtung (15) einen als Kugelkalotte ausgebildeten Lagerabschnitt (25) aufweist, der in einem gebogenen Aufnahmeabschnitt (26) in der länglichen Außenhülse (7) gelagert ist, oder ein Getriebeelement (17) der mechanischen Getriebevorrichtung (15) zur Übertragung der Antriebsbewegung verschwenkbar um eine Referenzachse (24) gelagert ist, die sich rechtwinkelig zur Mittelachse (13) einer Werkzeuganschlussvorrichtung (11) und zur Längsachse (9) einer Antriebswelle (8) eines Winkelstücks (1-6, 40) erstreckt, um die Werkzeuganschlussvorrichtung (11) oder ein damit verbindbares Werkzeug (12) insbesondere in eine taumelnde Bewegung zu versetzen.

## Beschreibung

Die Erfindung betrifft ein medizinisches oder dentales, insbesondere endodontisches, mechanisch betreibbares Winkelstück zum Antreiben eines Werkzeugs, insbesondere eines endodontischen Aktivator-Werkzeugs, um das Reinigen eines geöffneten Wurzelkanals zu unterstützen.

Das medizinische oder dentale Winkelstück ist insbesondere dazu vorgesehen, das Werkzeug in eine vibrierende, kreisförmige, elliptische oder taumelnde Bewegung und / oder in eine schwingende Bewegung zu versetzen, zum Beispiel in eine vibrierende oder schwingende Längsbewegung oder Hin- und Herbewegung. Dabei kann es durchaus gewünscht sein, dass das Bewegungsmuster des Werkzeugs eine gewisse Variabilität aufweist, d.h. dass die Bewegungsbahn, auf der das Werkzeug durch das Winkelstück bewegt wird, innerhalb eines gewissen Bereichs variiert. Beispielsweise ist das Winkelstück ausgebildet, das Werkzeug in eine Längsbewegung mit einer geringen lateralen Abweichung zu versetzen, wobei das Maß der lateralen Abweichung bei aufeinanderfolgenden Längsbewegungen des Werkzeugs unterschiedlich ist, insbesondere auch zufällig ist.

Das in einen geöffneten Wurzelkanal eingeführte und durch das Winkelstück in zumindest eine der vorgenannten Bewegungen versetzte Werkzeug ist vorgesehen und / oder ausgebildet, mechanische Energie oder Bewegungsenergie in den Wurzelkanal einzubringen, um das (mechanische und/oder chemische) Reinigen des Wurzelkanals direkt oder indirekt zu unterstützen, zum Beispiel durch Lösen von Gewebeteil von der Wurzelkanalwand oder durch Zerkleinern von im Wurzelkanal befindlichem Gewebe. Insbesondere ist das Werkzeug vorgesehen und / oder ausgebildet, in dem Wurzelkanal vorhandene Flüssigkeit in Bewegung zu versetzen und / oder zu durchmischen und / oder zu aktivieren, wodurch die Reinigung des Wurzelkanals bewirkt oder beschleunigt wird.

Ein derartiges medizinisches oder dentales, mechanisch betriebenes Winkelstück ist aus der Patentanmeldung EP 1 743 593 A1 bekannt. Das Winkelstück umfasst einen Antriebsmotor, der einen Antriebsblock in Rotation versetzt. Der Antriebsblock hat eine exzentrische Öffnung, in die ein Ende einer gewinkelten und an einer Drehachse im Kopf des Winkelstücks gelagerten Abtriebswelle eingreift. Die Abtriebswelle ist gewinkelt ausgebildet und weist im Bereich des Winkels ein Ringelement auf, das von einer Welle durchsetzt ist. Aufgrund der Exzentrizität der Aufnahmeöffnung wird die Abtriebswelle in eine rotierende Bewegung versetzt, die über das Ringelement auf das Werkzeug übertragen wird.

Der Aufbau dieses vorbekannten Winkelstücks, insbesondere des Antriebsmechanismus, um das Werkzeug in die schwingende oder vibrierende Bewegung versetzen zu können, ist kompliziert und aufwendig. Insbesondere verursacht die Lagerung der Abtriebswelle durch das Ringelement, das von einer Welle durchsetzt ist, eine sehr unrunde Übertragung der Antriebsbewegung und ein lautes Geräusch.

Die Aufgabe der vorliegenden Erfindung besteht somit darin, ein medizinisches oder dentales, insbesondere endodontisches, mechanisch betreibbares Winkelstück zum Antreiben eines Werkzeugs für das Reinigen eines geöffneten Wurzelkanals mit einem alternativen Antriebsmechanismus zu schaffen. Der Antriebsmechanismus soll insbesondere einfacher aufgebaut und somit leichter und kostengünstiger herstellbar sein und die Antriebsbewegung besser und geräuschärmer übertragen.

Diese Aufgabe wird durch ein medizinisches oder dentales, insbesondere endodontisches, mechanisch betreibbares Winkelstück gemäß dem Anspruch 1 oder 2 gelöst. Bevorzugte Ausführungsbeispiele sind in den Unteransprüchen beschrieben.

Das medizinische oder dentale Winkelstück umfasst eine längliche Außenhülse, eine drehbar in der Außenhülse gelagerte Antriebswelle, die sich entlang einer Längsachse erstreckt, eine in einem distalen Endbereich der länglichen Außenhülse beweglich angeordnete Werkzeuganschlussvorrichtung zum lösbaren Verbinden eines Werkzeugs mit dem Winkelstück, wobei die Werkzeuganschlussvorrichtung eine Mittelachse aufweist, die gewinkelt (mit einem Winkel > 0°) zur Längsachse der Antriebswelle angeordnet ist, eine Werkzeugöffnung im distalen Endbereich der länglichen Außenhülse, durch die sich die Werkzeuganschlussvorrichtung oder ein damit verbindbares Werkzeug erstreckt, und eine mechanische Getriebevorrichtung, welche die Antriebswelle und die Werkzeuganschlussvorrichtung mechanisch verbindet. Die Getriebevorrichtung ist ausgebildet, eine von der Antriebswelle zur Verfügung gestellte, insbesondere rotierende, Antriebsbewegung auf die Werkzeuganschlussvorrichtung zu übertragen. Die Getriebevorrichtung umfasst ein erstes Getriebeelement an einem Ende der Antriebswelle und ein zweites Getriebeelement, das mit der Werkzeuganschlussvorrichtung verbunden ist.

Gemäß einem ersten Ausführungsbeispiel weist das mit der Werkzeuganschlussvorrichtung verbundene zweite Getriebeelement einen als Kugelkalotte oder Kugelsegment ausgebildeten Lagerabschnitt auf, der in einem gebogenen, sphärischen oder konkaven Aufnahmeabschnitt in der länglichen Außenhülse gelagert ist, so dass der gebogene Aufnahmeabschnitt und der als Kugelkalotte ausgebildete Lagerabschnitt ein Gleitlager bilden. Dieses Gleitlager ist insbesondere zur beweglichen oder verschwenkbaren Lagerung des zweiten Getriebeelements und / oder einer (Kontakt-)Fläche zum Kontakt mit dem ersten Getriebeelement und / oder des Werkzeuganschlussvorrichtung und / oder des Werkzeugs vorgesehen.

Vorzugsweise ist der gebogene, sphärische oder konkave Aufnahmeabschnitt an einer Innenseite des distalen Endbereichs der länglichen Außenhülse, der auch als Kopfabschnitt bezeichnet werden kann, vorgesehen. Der Aufnahmeabschnitt ist entweder als separates Lagerelement ausgebildet, das in der Außenhülse befestigt ist, oder durch eine Innenseite des distalen Endbereichs der länglichen Außenhülse gebildet. Der Aufnahmeabschnitt (und somit auch der gebogene Lagerabschnitt und / oder das zweite Getriebeelement) ist nahe oder anschließend an der Werkzeugöffnung im distalen Endbereich der länglichen Außenhülse angeordnet.

Gemäß einem zweiten Ausführungsbeispiel ist das zweite Getriebeelement zur Übertragung der Antriebsbewegung auf die Werkzeuganschlussvorrichtung in der länglichen Außenhülse verschwenkbar um eine Referenzachse gelagert, die sich rechtwinkelig zur Mittelachse der Werkzeuganschlussvorrichtung und zur Längsachse der Antriebswelle erstreckt. Vorzugsweise schneidet die Referenzachse die Mittelachse der Werkzeuganschlussvorrichtung und / oder die Längsachse der Antriebswelle im rechten Winkel.

Der Aufbau der Getriebevorrichtungen gemäß den vorstehenden und im Weiteren beschriebenen Ausführungsbeispielen bewirkt somit insbesondere einen erheblich einfacheren Aufbau und einen runderen und geräuschärmeren Antrieb. Jedes der vorstehenden Ausführungsbeispiele kann einzeln in einem medizinischen oder dentalen Winkelstück implementiert sein. Alternativ sind mehrere oder alle dieser Ausführungsbeispiele in einem medizinischen oder dentalen Winkelstück implementiert.

Vorzugsweise umfasst die Getriebevorrichtung ein Exzentergetriebe oder ist die Getriebevorrichtung als Exzentergetriebe ausgebildet. Alternativ weist die Getriebevorrichtung ein (räumliches) Gleichdick auf, das vorzugsweise an der Antriebswelle vorgesehen ist, insbesondere konzentrisch zur Längsachse der Antriebswelle.

Zusätzlich zur verschwenkbaren Lagerung um die Referenzachse ist das zweite Getriebeelement zur Übertragung der Antriebsbewegung auf die Werkzeuganschlussvorrichtung in der länglichen Außenhülse, insbesondere in dem gebogenen, sphärischen oder konkaven Aufnahmeabschnitt, vorzugsweise schwenkbar um die Mittelachse der Werkzeuganschlussvorrichtung und / oder um die Längsachse der Antriebswelle gelagert. Das zweite Getriebeelement und / oder die Werkzeuganschlussvorrichtung und / oder das Werkzeug sind damit in eine Hin- und Herbewegung, eine Pendelbewegung, eine kreisende, umlaufende oder taumelnde Bewegung versetzbar, abhängig davon, ob die genannten Elemente nur um eine dieser Achsen oder um mehrere dieser Achsen schwenken.

Wenn die Getriebevorrichtung ein Exzentergetriebe aufweist, so ist vorzugsweise zumindest ein Teil des ersten Getriebeelements exzentrisch zur Längsachse der Antriebswelle angeordnet und umfasst zum Beispiel einen Stift, einen Fortsatz, einen Keil oder eine schiefe Ebene, die in einem Winkel ungleich 90° zur Längsachse der Antriebswelle angeordnet ist.

Das zweite Getriebeelement umfasst zum Beispiel eine ebene (Kontakt-)Fläche, eine gebogene (Kontakt-)Fläche, eine konkav oder konvex in Richtung der Antriebswelle geformte (Kontakt-)Fläche, einen Stift, einen Fortsatz, eine Aufnahme oder einen Rücksprung. Diese genannten Element sind insbesondere zum, zum Beispiel punktförmigen oder flächigen, Kontakt mit dem ersten Getriebeelement oder zum Eingriff des ersten Getriebeelements zur Übertragung der Antriebsbewegung vorgesehen. Diese genannten Element sind insbesondere an einer der Kugelkalotte oder dem Kugelsegment gegenüberliegenden Seite des zweiten Getriebeelements vorgesehen.

Vorzugsweise umfasst die als Exzentergetriebe ausgebildete mechanische Getriebevorrichtung ein erstes, exzentrisch zur Längsachse angeordnetes Getriebeelement an einem Ende der Antriebswelle und ein zweites Getriebeelement, das mit der Werkzeuganschlussvorrichtung verbunden ist, wobei das zweite Getriebeelement eine Kontaktfläche aufweist, an der die beiden Getriebeelemente einander zur Übertragung der Antriebsbewegung kontaktieren und wobei das erste, exzentrisch zur Längsachse angeordnete Getriebeelement auf einer kreisförmigen Bahn um die Längsachse bewegbar ist, wenn die Antriebswelle rotiert.

Vorzugsweise ist die Kontaktfläche des zweiten Getriebeelements verschwenkbar in dem distalen Endbereich der länglichen Außenhülse gelagert. Des Weiteren definiert, wenn die Antriebswelle rotiert, das erste Getriebeelement aufgrund seiner kreisförmigen Bewegung um die Längsachse der Antriebswelle eine Kreisbahn auf der Kontaktfläche des zweiten Getriebeelements. In anderen Worten bewegt sich das erste Getriebeelement aufgrund seiner kreisförmigen Bewegung um die Längsachse der Antriebswelle auch auf der Kontaktfläche des zweiten Getriebeelements auf einer (im Wesentlichen festgelegten oder gleichbleibenden) Kreisbahn und / oder es bildet demgemäß eine Kreisbahn auf der Kontaktfläche ab. Aufgrund des Kontaktes der beiden Getriebeelemente zur Übertragung der Antriebsbewegung und der dadurch bewirkten Schwenkung der Kontaktfläche ist die kürzeste Entfernung zwischen einem auf der Kreisbahn angeordneten ersten Punkt und einer die Längsachse der Antriebswelle innerhalb der axialen Ausdehnung der Antriebswelle im rechten Winkel schneidenden Referenzebene größer als die kürzeste Entfernung zwischen einem auf der Kreisbahn angeordneten, dem ersten Punkt gegenüberliegenden zweiten Punkt und der Referenzebene. Dies bedeutet insbesondere, dass, da der erste Punkt sich während des Betriebs der Getriebevorrichtung ständig auf der Kreisbahn weiterbewegt bzw. seine Position verändert (und demgemäß auch der zweite Punkt), die Kontaktfläche oder das zweite Getriebeelement aufgrund der verschwenkbaren Lagerung beständig ihre / seine räumliche Positionierung in Bezug auf die Referenzebene ändert, so dass die Kontaktfläche oder das zweite Getriebeelement insbesondere in eine taumelnde oder wobbelnde Bewegung versetzbar sind. Besonders bevorzugt ist der erste Punkt jener Punkt (auf) der Kreisbahn, dessen kürzeste Entfernung zur Referenzebene am größten ist, während der zweite Punkt jener Punkt (auf) der Kreisbahn ist, dessen kürzeste Entfernung zur Referenzebene am geringsten ist.

Der erste Punkt kann vorzugsweise der Kontaktpunkt sein, an dem das erste Getriebeelement das zweite Getriebeelement zur Übertragung der Antriebsbewegung kontaktiert.

Der dem ersten Punkt auf der Kreisbahn gegenüberliegende zweite Punkt ist insbesondere jener Punkt, der auf der Kreisbahn um 180° versetzt zu dem ersten Punkt angeordnet ist. Die kürzeste oder direkte Entfernung zwischen der Referenzebene und dem ersten Punkt bzw. dem zweiten Punkt ist jeweils durch eine Gerade gebildet, die insbesondere im rechten Winkel zur Referenzebene angeordnet ist. Die Längsachse der Antriebswelle schneidet oder durchsetzt die Referenzebene im rechten Winkel.

Demgemäß wandern der erste Punkt und der gegenüberliegende zweite Punkt (auf der Kreisbahn) über die Kontaktfläche des zweiten Getriebeelements, wobei die kürzeste Entfernung zwischen jenem Bereich der Kontaktfläche oder des zweiten Getriebeelements, an dem sich der erste Punkt (aktuell) befindet, und der Referenzebene größer als die kürzeste Entfernung zwischen jenem Bereich der Kontaktfläche oder des zweiten Getriebeelements, an dem sich der zweite Punkt (aktuell) befindet, und der Referenzebene. Alternativ ist die kürzeste Entfernung zwischen jenem Bereich der Kontaktfläche oder des zweiten Getriebeelements, an dem sich der zweite Punkt (aktuell) befindet und der Referenzebene geringer als die kürzeste Entfernung zwischen der Referenzebene und jenem Bereich der Kontaktfläche oder des zweiten Getriebeelements, an dem sich der erste Punkt befindet.

Vorzugsweise ist die Kontaktfläche des zweiten Getriebeelements zur Übertragung der Antriebsbewegung auf die Werkzeuganschlussvorrichtung in der länglichen Außenhülse, insbesondere in dem distalen Endbereich, verschwenkbar um eine Referenzachse gelagert.

Vorzugsweise weist das erste Getriebeelement eine Exzenterfläche auf, welche durch eine vorderste, der Mittelachse der Werkzeuganschlussvorrichtung (am nächsten) zugewandte oder am wenigsten weit davon entfernte Endfläche des ersten Getriebeelements gebildet ist und welche die Kontaktfläche des zweiten Getriebeelements, insbesondere während einer vollständigen Umdrehung auf der kreisförmigen Bahn um die Längsachse im Wesentlichen ohne Unterbrechung, kontaktiert, um die Antriebsbewegung auf die Kontaktfläche des zweiten Getriebeelements und die Werkzeuganschlussvorrichtung zu übertragen. Die Übertragung der Antriebsbewegung von dem ersten Getriebeelement auf das zweite Getriebeelement wird damit durch die der Mittelachse der Werkzeuganschlussvorrichtung zugewandte und der Mittelachse nächsten Endfläche des ersten Getriebeelements, die als Exzenterfläche ausgebildet ist, bewirkt.

Dieser, insbesondere kontinuierliche, Kontakt der Exzenterfläche und der Kontaktfläche bewirkt (durch die Übertragung der Antriebsbewegung auf das zweite Getriebeelement) die im Vorstehenden bereits ausführlich beschriebene Verschwenkung oder taumelnde Bewegung der Kontaktfläche oder des zweiten Getriebeelements und insbesondere auch eine geräuscharme Übertragung der Antriebsbewegung durch die Getriebevorrichtung. Insbesondere ist durch das Vorsehen dieser durch die Endfläche gebildeten Exzenterfläche keine Nut in dem zweiten Getriebeelement oder der Kontaktfläche nötig.

Vorzugsweise ist die Kontaktfläche des zweiten Getriebeelements zur Übertragung der Antriebsbewegung auf die Werkzeuganschlussvorrichtung des Weiteren in der länglichen Außenhülse, insbesondere in dem distalen Endbereich, schwenkbar um die Mittelachse der Werkzeuganschlussvorrichtung gelagert.

Aufgrund der schwenkbaren Lagerung der Kontaktfläche und / oder des zweiten Getriebeelements um die Referenzachse und um die Mittelachse der Werkzeuganschlussvorrichtung ist / sind die Kontaktfläche und / oder das zweite Getriebeelement durch die Rotation des ersten Getriebeelements in eine taumelnde oder wobbelnde Bewegung versetzbar, so wie dies auch im Vorstehenden bereits beschrieben ist.

Bevorzugt ist ein Drehpunkt vorgesehen, um den sich die (Kontakt-)Fläche, Aufnahme, der Rücksprung und / oder das zweite Getriebeelement bewegen, insbesondere taumelt / taumeln. Besonders bevorzugt ist dieser Drehpunkt innerhalb des medizinischen oder dentalen Winkelstücks oder der länglichen Außenhülse, insbesondere deren distalen Endbereichs, angeordnet. Alternativ oder zusätzlich ist der Drehpunkt auf (einer Verlängerung) der Längsachse der Antriebswelle und / oder an dem Schnittpunkt der Referenzachse und der Mittelachse der Werkzeuganschlussvorrichtung und vorzugsweise auch der Längsachse der Antriebswelle vorgesehen. Alternativ oder zusätzlich ist der Drehpunkt innerhalb des zweiten Getriebeelements oder innerhalb dessen Körpers oder innerhalb des gebogenen, sphärischen oder konkaven Lagerabschnitts des zweiten Getriebeelements angeordnet.

Vorzugsweise umfasst das erste, exzentrisch zur Längsachse angeordnete Getriebeelement einen Stift, einen Fortsatz, einen Keil oder eine schiefe Ebene, die in einem Winkel ungleich 90° zur Längsachse der Antriebswelle angeordnet ist. Insbesondere beträgt die Neigung der schiefen Ebene 91° - 105°, besondere bevorzugt 92° - 97°, in Bezug auf die Längsachse der Antriebswelle. Besonders bevorzugt ist das erste, exzentrisch zur Längsachse angeordnete Getriebeelement, insbesondere der Keil oder die schiefe Ebene, einteilig mit der Antriebswelle ausgebildet. Vorzugsweise ist das erste, exzentrisch zur Längsachse angeordnete Getriebeelement an einem Ende der Antriebswelle angeordnet oder bildet das Ende der Antriebswelle. Vorzugsweise umfasst das erste, exzentrisch zur Längsachse angeordnete Getriebeelement eine Exzenterfläche, die in Bezug auf die Antriebswelle und / oder das erste Getriebeelement am nächsten zur Mittelachse der Werkzeuganschlussvorrichtung angeordnet ist. Vorzugsweise ist die Exzenterfläche als Teil des Stifts, des Fortsatzes, des Keils oder der schiefen Ebene ausgebildet. Alternativ umfasst die Exzenterfläche die gesamte schiefe Ebene oder die gesamte Oberfläche des Keils oder der schiefen Ebene.

Vorzugsweise weist das zweite Getriebeelement oder die (Kontakt-)Fläche eine ebene Fläche, eine gebogene Fläche, eine konkav oder konvex in Richtung der Antriebswelle geformte Fläche, einen Stift oder einen Fortsatz auf. Durch das Vorsehen insbesondere von gebogenen, konkaven oder konvexen Flächen ist es insbesondere möglich, die Bewegung oder das Taumeln der Kontaktfläche und / oder des zweiten Getriebeelement und / oder der Werkzeuganschlussvorrichtung und / oder des Werkzeugs zu beeinflussen. Besonders bevorzugt ist die Kontaktfläche einteilig mit dem zweiten Getriebeelement ausgebildet. Vorzugsweise ist die Kontaktfläche in Richtung der Antriebswelle und / oder des ersten, exzentrisch zur Längsachse angeordneten Getriebeelements und / oder der Exzenterfläche gewandt.

Bevorzugt sind das erste Getriebeelement und die Kontaktfläche des zweiten Getriebeelements als erste und zweite Ebene ausgebildet, wobei vorzugsweise zumindest eine der beiden Ebenen, insbesondere die erste Ebene des ersten Getriebeelements, als Keil oder schiefe Ebene (in Bezug auf die Längsachse der Antriebswelle) ausgebildet ist. Besonders bevorzugt sind die erste Ebene und die zweite Ebene so angeordnet, dass sie einander derart kontaktieren oder aneinander lagern, dass zumindest eine der beiden Ebenen die andere der beiden Ebenen im Wesentlichen vollständig bedeckt oder überdeckt. Insbesondere überdeckt eine Ebene die andere auch während des Betriebs der Getriebevorrichtung, d.h. während das erste und zweite Getriebeelement in Bewegung sind. Besonders bevorzugt ist die Überdeckung kontinuierlich während einer vollen Umdrehung des ersten Getriebeelements. Dies wird insbesondere durch die im Vorstehenden beschriebene verschwenkbare Anordnung des zweiten Getriebeelements oder deren Kontaktfläche (um die Referenzachse und / oder Mittelachse der Werkzeuganschlussvorrichtung) bewirkt. Vorzugsweise folgt die zweite Ebene oder Kontaktfläche oder das zweite Getriebeelement aufgrund deren verschwenkbarer Anordnung dem ersten Getriebeelement oder der ersten Ebene.

Vorzugsweise weist das zweite Getriebeelement einen Körper auf, an dem zumindest der als Kugelkalotte oder Kugelsegment ausgebildete Lagerabschnitt und die (Kontakt-)Fläche, der Stift, der Fortsatz, die Aufnahme oder der Rücksprung vorgesehen sind. Besonders bevorzugt bildet der als Kugelkalotte ausgebildete Lagerabschnitt zumindest einen Teil eines Mantels des zweiten Getriebeelements. Vorzugsweise ist die (Kontakt-)Fläche des zweiten Getriebeelements als Ebene, ausgebildet, wobei der als Kugelkalotte ausgebildete Lagerabschnitt sich von einer ersten Seite der (Kontakt-)Fläche um die Mittelachse der Werkzeuganschlussvorrichtung herum zu einer zweiten, insbesondere der ersten Seite gegenüberliegenden, Seite der (Kontakt-)Fläche erstreckt. Vorzugsweise erstreckt sich die Referenzachse durch den als Kugelkalotte ausgebildeten Lagerabschnitt.

Vorzugsweise weist das zweite Getriebeelement einen Mittelpunkt auf, der insbesondere mit dem im Vorstehenden beschriebenen Drehpunkt ident ist. Vorzugsweise sind der Drehpunkt oder Mittelpunkt auf der Längsachse oder auf einer Verlängerung der Längsachse der Antriebswelle angeordnet.

Vorzugsweise weist zumindest ein Abschnitt der Antriebswelle eine sich entlang der Längsachse erstreckende Bohrung auf, so dass ein Medium, insbesondere ein Schmiermittel, durch die Bohrung in Richtung des distalen Endbereichs der länglichen Außenhülse, insbesondere zu der Getriebevorrichtung, förderbar ist. Die Bohrung erstreckt sich wahlweise durch die gesamte Antriebswelle von einem ersten Ende der Antriebswelle zu einem zweiten Ende, an dem vorzugsweise das erste Getriebeelement vorgesehen ist, oder die Bohrung erstreckt sich nur durch einen Abschnitt der Antriebswelle. In letzterem Fall mündet die Bohrung in einer Verbindungsöffnung an der Mantelfläche der Antriebswelle. Vorzugsweise ist die Bohrung über die Verbindungsöffnung oder eine Öffnung am ersten Ende der Antriebswelle mit einer Medienquelle, insbesondere einer Schmiermittelquelle, verbunden oder verbindbar.

Vorzugsweise mündet die Bohrung der Antriebswelle in eine Abgabeöffnung, die an einer dem zweiten Getriebeelement zugewandten Endfläche der Antriebswelle oder an dem ersten Getriebeelement vorgesehen ist. Vorzugsweise ist das Medium, insbesondere das Schmiermittel, über diese Abgabeöffnung in Richtung oder an die Getriebevorrichtung und / oder an das durch den gebogenen Aufnahmeabschnitt und den gebogenen Lagerabschnitt gebildete Gleitlager abgebbar. Vorzugsweise ist das erste Getriebeelement als ringförmige (schiefe) Ebene oder Fläche ausgebildet, in deren Mitte die Abgabeöffnung angeordnet ist.

Vorzugsweise umfasst das medizinische oder dentale Winkelstück eine mit dem zweiten Getriebeelement verbundene Vorrichtung zum Einschränken der Bewegung eines mit dem Winkelstück verbundenen Werkzeugs oder der Werkzeuganschlussvorrichtung, so dass insbesondere das Werkzeug oder die Werkzeuganschlussvorrichtung einen bevorzugten Bewegungsverlauf ausführen und / oder das Werkzeug oder die Werkzeuganschlussvorrichtung einen Rand der Werkzeugöffnung nicht berühren. Vorzugsweise ist zumindest ein Teil der Vorrichtung zum Einschränken der Bewegung an dem zweiten Getriebeelement vorgesehen, so dass insbesondere auch die Bewegung des zweiten Getriebeelements einschränkbar ist. Vorzugsweise ist ein Teil der Vorrichtung zum Einschränken der Bewegung durch das zweite Getriebeelement oder gemeinsam mit dem zweiten Getriebeelement bewegbar. Vorzugsweise ist zumindest ein Teil der Vorrichtung zum Einschränken der Bewegung zentrisch zu der Mittelachse der Werkzeuganschlussvorrichtung und / oder an dem zweiten Getriebeelement, an einer der Werkzeuganschlussvorrichtung gegenüberliegenden Position angeordnet. Vorzugsweise ist der an dem zweiten Getriebeelement vorgesehene Teil der Vorrichtung zum Einschränken der Bewegung außerhalb des als Kugelkalotte ausgebildeten Lagerabschnitts angeordnet.

Vorzugsweise umfasst die Vorrichtung zum Einschränken der Bewegung eines mit dem Winkelstück verbundenen Werkzeugs oder der Werkzeuganschlussvorrichtung einen mit dem zweiten Getriebeelement verbundenen Fortsatz, der in einen Rücksprung eines in Bezug auf das zweite Getriebeelement feststehendes Bauteil eingreift. Vorzugsweise ist der Fortsatz an dem zweiten Getriebeelement vorgesehen. Vorzugsweise ist der Rücksprung an der Innenseite der länglichen Außenhülse, insbesondere des distalen Endbereichs, angeordnet. Vorzugsweise ist der Rücksprung als längliche Nut ausgebildet, deren Länge und Breite unterschiedliche Werte aufweist. Vorzugsweise ragt der Fortsatz in den Rücksprung, wobei der Rücksprung derart geformt und / oder ausgebildet ist, dass er in dem Rücksprung bewegbar ist. Vorzugsweise ist der Fortsatz zylindrisch oder scheibenförmig geformt.

Zum Beispiel weist der Rücksprung eine Länge L, die sich im Wesentlichen parallel zur Längsachse der Antriebswelle erstreckt, und eine Breite B, die im Wesentlichen rechtwinkelig zur Länge L angeordnet ist, auf, wobei L größer B ist. Damit wird die seitliche Bewegung der Werkzeuganschlussvorrichtung oder des Werkzeugs aufgrund der geringen Breite B beschränkt, so dass das Werkzeug oder die Werkzeuganschlussvorrichtung eine elliptische Bewegung ausführen, mit einer Längsbewegung im Wesentlichen parallel Längsachse der Antriebswelle und einer beschränkten oder verkürzten seitlichen Auslenkung.

Vorzugsweise umfasst die Werkzeuganschlussvorrichtung einen länglichen Schaft, der insbesondere einteilig mit dem zweiten Getriebeelement ausgebildet ist. Insbesondere ist der Schaft an dem Körper des zweiten Getriebeelements und / oder an einer Position zwischen dem gebogenen Lagerabschnitt des zweiten Getriebeelements und der Kontaktfläche angeordnet.

Vorzugsweise weist die Werkzeuganschlussvorrichtung einen länglichen Schaft auf, an dem das Werkzeug kraftschlüssig und / oder formschlüssig befestigbar ist. Vorzugsweise sind an dem länglichen Schaft zumindest ein Rücksprung und / oder zumindest ein Fortsatz vorgesehen, die in zumindest einen entsprechenden Rücksprung und / oder Fortsatz des Werkzeugs eingreifen, um das Werkzeug lösbar an dem länglichen Schaft zu befestigen. Alternativ oder zusätzlich ist an der Werkzeuganschlussvorrichtung zumindest ein Gewinde zur Verbindung mit einem Werkzeug vorgesehen. Selbstverständlich können auch andere Befestigungselemente zur Verbindung mit einem Werkzeug an der Werkzeuganschlussvorrichtung vorgesehen sein.

Vorzugsweise ist die Antriebswelle in Richtung der Getriebevorrichtung, insbesondere des zweiten Getriebeelements, vorgespannt, um insbesondere einen kontinuierlichen Kontakt zwischen dem ersten und dem zweiten Getriebeelement sicherzustellen, vorzugsweise auch während des Betriebs der Getriebevorrichtung. Besonders bevorzugt ist durch die Vorspannung der kontinuierliche Kontakt zwischen dem ersten und zweiten Getriebeelement, die als erste und zweite Ebene ausgebildet sind, sichergestellt. Vorzugsweise umfasst das medizinische oder dentale Winkelstück zumindest ein Vorspannelement, das die Antriebswelle in Richtung der Getriebevorrichtung vorspannt. Vorzugsweise umfasst das Vorspannelement ein Federelement und / oder ein Gewindeelement.

Besonders bevorzugt sind an dem zweiten Getriebeelement an gegenüberliegenden Positionen oder Flächen die Werkzeuganschlussvorrichtung und zumindest ein Teil der Vorrichtung zum Einschränken der Bewegung eines mit dem Winkelstück verbundenen Werkzeugs oder der Werkzeuganschlussvorrichtung vorgesehen.

Vorzugsweise kontaktieren das erste Getriebeelement und das zweite Getriebeelement einander ohne ineinander einzugreifen. Dies ist insbesondere durch die im Vorstehenden beschriebene Ausbildung des ersten und / oder zweiten Getriebeelements als Fläche und / oder Ausbildung der Exzenterfläche des ersten Getriebeelements durch eine vorderste, der Mittelachse der Werkzeuganschlussvorrichtung zugewandte Endfläche des ersten Getriebeelements erzielbar. Damit wird die Herstellung der Getriebevorrichtung vereinfacht, da keines der Getriebeelemente eine Nut aufweist, in welche das andere Getriebeelement eingreift.

Vorzugsweise ist die Getriebevorrichtung ausgebildet, die von der Antriebswelle zur Verfügung gestellte (rotierende) Antriebsbewegung auf die Werkzeuganschlussvorrichtung oder ein Werkzeug zu übertragen und zu wandeln. Beispielsweise wird die rotierende Antriebsbewegung in eine kreisende Bewegung, insbesondere in eine im Wesentlichen ovale oder elliptische Rotationsbewegung, der Werkzeuganschlussvorrichtung oder des Werkzeugs gewandelt. Diese Wandlung der Antriebsbewegung ist insbesondere durch die im Vorstehenden beschriebene Vorrichtung zum Einschränken der Bewegung eines mit dem Winkelstück verbundenen Werkzeugs oder der Werkzeuganschlussvorrichtung bewirkt.

Die Getriebevorrichtung ist vorzugsweise dazu ausgebildet, eine oszillierende Bewegung, insbesondere eine oszillierende kreisende Bewegung auf die Werkzeuganschlussvorrichtung oder ein Werkzeug zu übertragen.

Vorzugsweise umfasst das medizinische oder dentale Winkelstück zumindest ein Gleitlager zum drehbaren Lagern der Antriebswelle in der Außenhülse. Besonders bevorzugt ist das Gleitlager durch eine erste Gleitfläche an der Antriebswelle und durch eine zweite Gleitfläche gebildet. Besonders bevorzugt ist die zweite Gleitfläche an der Innenseite der länglichen Außenhülse drehfest angeordnet oder durch eine Innenseite der länglichen Außenhülse gebildet.

Das medizinische oder dentale, insbesondere mechanisch betreibbare, Winkelstück ist vorzugsweise entweder als Aufsatzteil ausgebildet, das mit einem Antriebsmotor verbindbar ist, so dass das Aufsatzteil und der Antriebsmotor gemeinsam ein Handgriffelement bilden, insbesondere ein autonomes oder schnurloses Handgriffelement mit einer internen Energiequelle. Alternativ ist das Winkelstück oder das Aufsatzteil und der Antriebsmotor umfassende Handgriffelement mit einer externen, außerhalb des Handgriffelements vorgesehenen Energiequelle über eine Versorgungsleitung verbindbar.

Die Erfindung wird im Folgenden anhand mehrerer Ausführungsbeispiele und Bezug nehmend auf die beigefügten Zeichnungen erläutert:
Fig.1 zeigt eine Außenansicht eines ersten Ausführungsbeispiels eines medizinischen oder dentalen Winkelstücks zum Antrieb eines endodontischen Werkzeugs.
Fig. 2 zeigt das Winkelstück der Figur 1 in einer teilweisen Schnittdarstellung durch die längliche Außenhülse und insbesondere durch den distalen Endbereich der länglichen Außenhülse.
Fig.3 zeigt die Antriebswelle, die Getriebevorrichtung und die Werkzeuganschlussvorrichtung des Winkelstücks der Figur 1 in betriebsbereiter Anordnung.
Fig.4 zeigt die Antriebswelle, die Getriebevorrichtung und die Werkzeuganschlussvorrichtung des Winkelstücks der Figur 1, wobei die Antriebswelle von der Werkzeuganschlussvorrichtung beabstandet ist.
Fig.5 zeigt die Antriebswelle, die Getriebevorrichtung und die Werkzeuganschlussvorrichtung des Winkelstücks der Figur 4 aus einer anderen Perspektive.
Fig. 6 zeigt die Antriebswelle, die Getriebevorrichtung und die Werkzeuganschlussvorrichtung des Winkelstücks sowie eine Kreisbahn auf der Kontaktfläche des zweiten Getriebeelements, auf der sich das erste Getriebeelement aufgrund seiner kreisförmigen Bewegung um die Längsachse der Antriebswelle bewegt.
Fig.7 zeigt ein zweites Ausführungsbeispiel eines medizinischen oder dentalen Winkelstücks zum Antrieb eines endodontischen Werkzeugs mit einem als gebogene Kontaktfläche ausgebildeten zweiten Getriebeelement.
Fig.8 zeigt ein drittes Ausführungsbeispiel eines medizinischen oder dentalen Winkelstücks zum Antrieb eines endodontischen Werkzeugs mit einem stiftförmigen ersten Getriebeelement und einem als gebogene Kontaktfläche ausgebildeten zweiten Getriebeelement.
Fig.9 zeigt ein viertes Ausführungsbeispiel eines medizinischen oder dentalen Winkelstücks zum Antrieb eines endodontischen Werkzeugs mit einem als Fortsatz ausgebildeten zweiten Getriebeelement.
Fig. 10 zeigt ein medizinisches oder dentales Winkelstück mit einem endodontischen Werkzeug und einer Bewegungsbahn, auf der das Werkzeug durch das Winkelstück bewegt wird.
Fig. 11 zeigt ein medizinisches oder dentales Winkelstück mit einem endodontischen Werkzeug und einer alternativen Bewegungsbahn, auf der das Werkzeug durch das Winkelstück bewegt wird.
Fig. 12 zeigt ein fünftes Ausführungsbeispiel eines medizinischen oder dentalen Winkelstücks zum Antrieb eines endodontischen Werkzeugs mit einem mechanischen Getriebe, das ein Gleichdick aufweist.

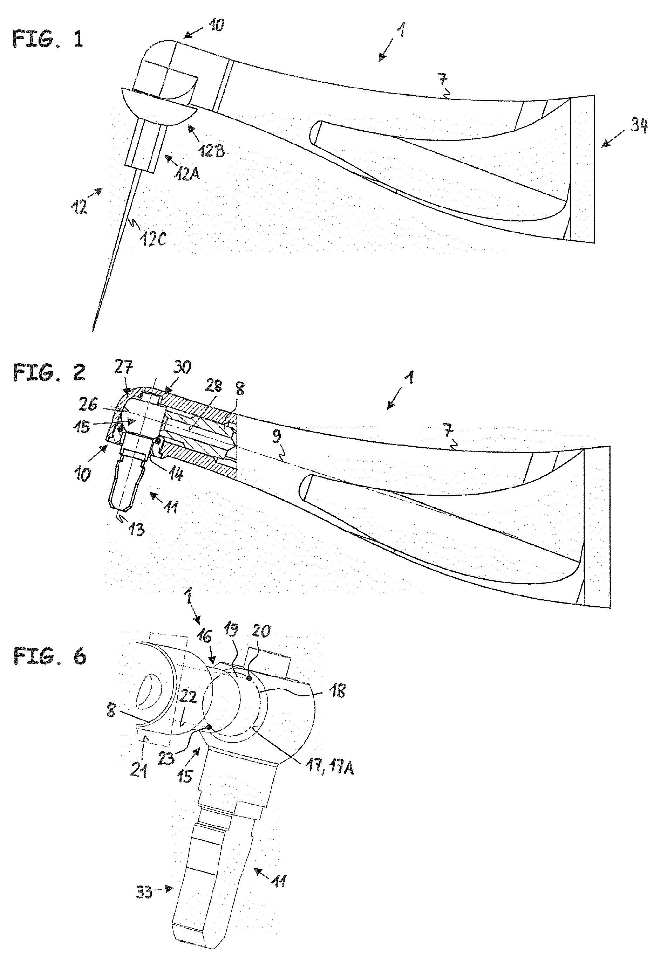

Im Folgenden werden die auf alle in den Figuren 1-12 dargestellten medizinischen oder dentalen Winkelstücke 1-6, 40 zutreffenden Merkmale beschrieben:
Die Winkelstücke 1-6, 40 umfassen eine längliche, insbesondere gebogene oder gewinkelte Außenhülse 7. Die Außenhülse 7 ist insbesondere als metallische oder aus Kunststoff gefertigte Griffhülse für den Anwender ausgebildet. An einem Ende der Außenhülse 7 ist eine Anschlussvorrichtung 34 zur Verbindung des Winkelstücks mit eine motorischen Antrieb, insbesondere mit einem E-Motor, vorgesehen.

An einem der Anschlussvorrichtung 34 gegenüberliegenden Ende der Außenhülse 7 ist ein distaler Endbereich 10 der Außenhülse 7 angeordnet. An diesen distalen Endbereich 10 ist lösbar ein Werkzeug 12 befestigt, insbesondere ein endodontisches Werkzeug, vorzugsweise ein endodontischer Aktivator zur Unterstützung der Reinigung eines geöffneten Wurzelkanals.

Der endodontische Aktivator 12 umfasst einen hohlen Schaftbereich 12A, eine Schürze 12B und ein langes, schmales, vorzugsweise nadelförmiges, Aktivatorelement 12C zum Einführen in einen Wurzelkanal. Die Schürze 12B ist vorzugsweise derart ausgebildet, dass sie den distalen Endbereich 10 umgibt, um insbesondere ein Eindringen von Verschmutzungen in das Winkelstück 1-6, 40 zu unterbinden. Der Schaft 12A ist vorzugsweise hohl ausgebildet, um eine Werkzeuganschlussvorrichtung 11 des Winkelstücks 1-6, 40 aufnehmen zu können. Im Inneren des Schafts 12A sind dazu Vorsprünge oder Aussparungen oder andere geometrische Formen vorgesehen, die in entsprechende geometrische Formen der Werkzeuganschlussvorrichtung 11 eingreifen.

Die in den Figuren 1-12 dargestellten Winkelstücke 1-6, 40 sind insbesondere als Aufsatzteile ausgebildet, die mit einem motorischen Antrieb verbindbar sind und gemeinsam mit dem motorischen Antrieb ein schnurloses Behandlungswerkzeug bilden.

In der Außenhülse 7 ist drehbar eine Antriebswelle 8 gelagerte, die sich entlang einer Längsachse 9 erstreckt. In dem distalen Endbereich 10 der länglichen Außenhülse 7 ist des Weiteren eine beweglich angeordnete Werkzeuganschlussvorrichtung 11 zum lösbaren Verbinden des Werkzeugs 12 mit dem medizinischen oder dentalen Winkelstück 1-6, 40 vorgesehen. Die Werkzeuganschlussvorrichtung 11 weist eine Mittelachse 13 auf, die gewinkelt zur Längsachse 9 der Antriebswelle 8 angeordnet ist. Die Werkzeuganschlussvorrichtung 11 erstreckt sich durch eine Werkzeugöffnung 14 im distalen Endbereich 10 der länglichen Außenhülse 7.

Schließlich ist in der Außenhülse 7, insbesondere in deren distalen Endbereich 10, eine mechanische Getriebevorrichtung 15 vorgesehen, welche die Antriebswelle 8 und die Werkzeuganschlussvorrichtung 11 mechanisch verbindet. Die Getriebevorrichtung 15 ist ausgebildet, eine von dem motorischen Antrieb zur Verfügung gestellte und über die Antriebswelle 8 weitergeleitete Antriebsbewegung auf die Werkzeuganschlussvorrichtung 11 zu übertragen. Die Getriebevorrichtung 15 umfasst ein erstes Getriebeelement 16 an einem Ende der Antriebswelle 8 und ein zweites Getriebeelement 17, das mit der Werkzeuganschlussvorrichtung 11 verbunden ist.

Das mit der Werkzeuganschlussvorrichtung 11 verbundene zweite Getriebeelement 17 weist einen als Kugelkalotte oder Kugelsegment ausgebildeten Lagerabschnitt 25 auf, der in einem gebogenen Aufnahmeabschnitt 26 in der länglichen Außenhülse 7 gelagert ist, so dass der gebogene Aufnahmeabschnitt 26 und der als Kugelkalotte ausgebildete Lagerabschnitt 25 ein Gleitlager 27 bilden (siehe zum Beispiel Figuren 2, 10, 11). Der gebogene Aufnahmeabschnitt 26 ist insbesondere an einer Innenseite des distalen Endbereichs 10 der länglichen Außenhülse 7 vorgesehen und vorzugsweise durch die Innenseite des distalen Endbereichs 10 der länglichen Außenhülse 7 gebildet.

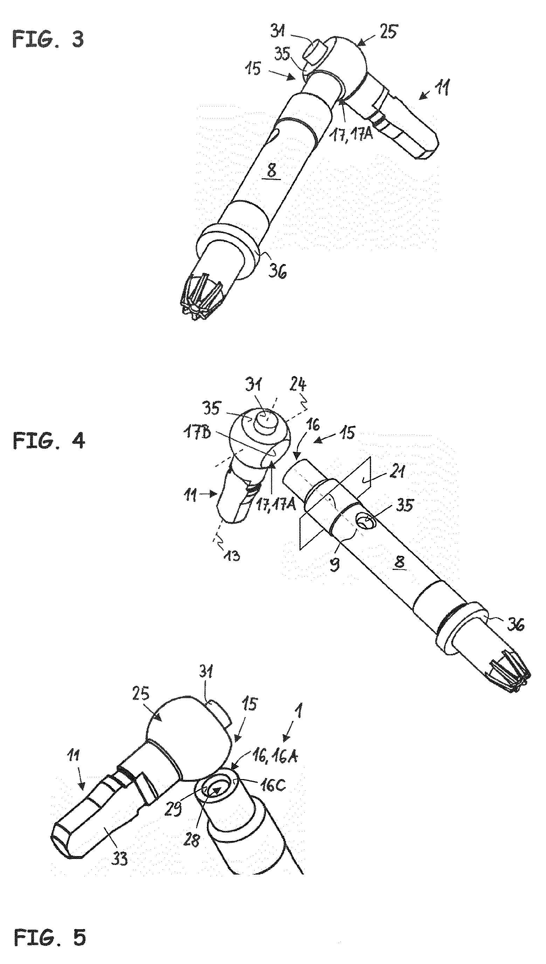

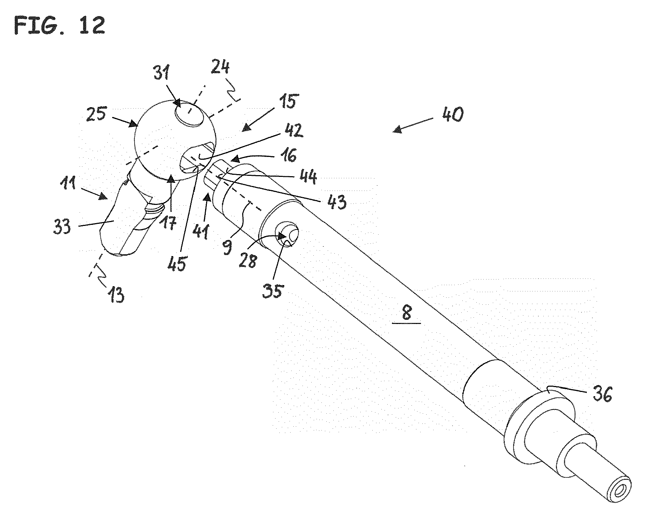

Das zweite Getriebeelement 17 ist des Weiteren zur Übertragung der Antriebsbewegung auf die Werkzeuganschlussvorrichtung 11 in der länglichen Außenhülse 7, insbesondere in dem Gleitlager 27, verschwenkbar um eine Referenzachse 24 gelagert, die sich rechtwinkelig zur Mittelachse 13 der Werkzeuganschlussvorrichtung 11 und zur Längsachse 9 der Antriebswelle 8 erstreckt (siehe zum Beispiel Figuren 4, 12). Vorzugsweise schneidet die Referenzachse 24 zumindest eine der beiden Achsen 9, 13.

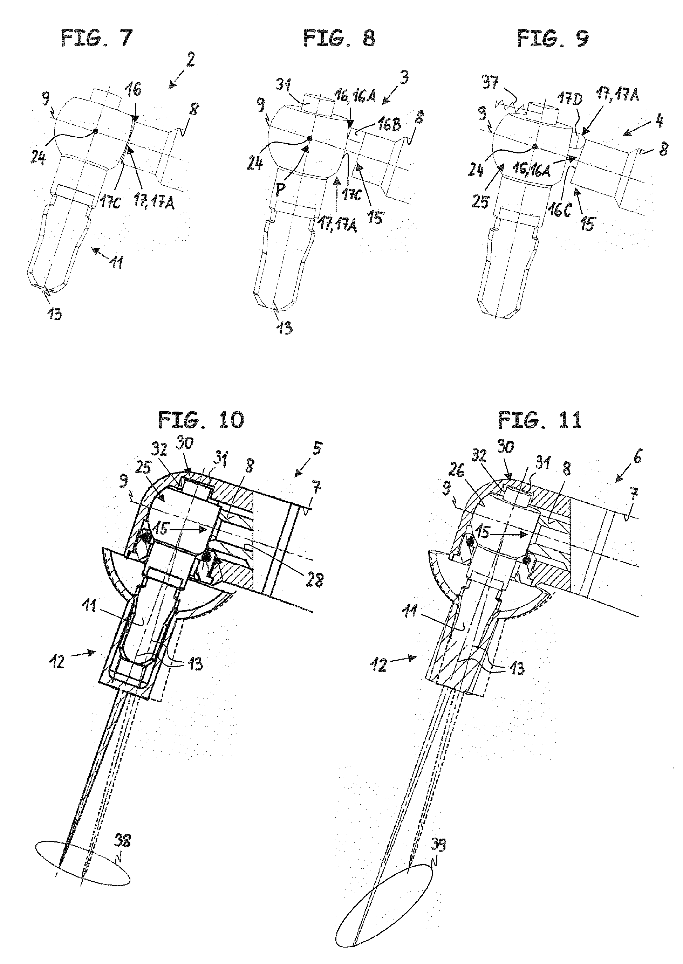

Innerhalb des zweiten Getriebeelements 17 ist ein Drehpunkt P (nur in Figur 8 bezeichnet) vorgesehen, um den sich das zweite Getriebeelement 17 bewegt, insbesondere taumelt. Der Drehpunkt P befindet sich insbesondere an dem Schnittpunkt (einer Verlängerung) der Längsachse 9 der Antriebswelle 8, der Referenzachse 24 und der Mittelachse 13 der Werkzeuganschlussvorrichtung 11.

Ein Abschnitt der Antriebswelle 8 weist eine sich entlang der Längsachse 9 erstreckende Bohrung 28 auf, durch die ein Medium, insbesondere ein Schmiermittel, in Richtung des distalen Endbereichs 10 der länglichen Außenhülse 7, insbesondere zu der Getriebevorrichtung 15, förderbar ist. Dazu mündet die Bohrung 28 in eine Öffnung 29, die an dem ersten Getriebeelement 16 vorgesehen ist. Wie insbesondere aus den Figuren 5 und 12 ersichtlich ist, ist das erste Getriebeelement 16, zum Beispiel eine Exzenterfläche 16A, ringförmig oder als Gleichdick 41 ausgebildet, wobei die Öffnung 29 der Bohrung 28 in der Mitte des ersten Getriebeelements 16, 16A, 40 angeordnet ist.

Über eine an der Mantelfläche der Antriebswelle 8 vorgesehene Öffnung 35 ist die Bohrung 28 mit einer Medienquelle, insbesondere einer Schmiermittelquelle, verbindbar.

Mit dem zweiten Getriebeelement 17 zumindest operativ verbunden ist eine Vorrichtung 30 zum Einschränken der Bewegung eines mit dem Winkelstück 1-6, 40 verbundenen Werkzeugs 12 oder der Werkzeuganschlussvorrichtung 11. Die Vorrichtung 30 zum Einschränken der Bewegung umfasst einen, insbesondere zylindrischen, Fortsatz 31, der an dem zweiten Getriebeelement 17 vorgesehen ist und durch oder mit dem zweiten Getriebeelement 17 bewegbar ist. Der Fortsatz 31 ist vorzugsweise von einer im Wesentlichen ebenen, zum Beispiel ringförmigen Fläche 35 umgeben.

Die Vorrichtung 30 zum Einschränken der Bewegung umfasst des Weiteren einen Rücksprung 32 (siehe Figur 10) in der Außenhülse 7, insbesondere an der Innenwand des distalen Endbereichs 10. Dieser Rücksprung 32 kann unterschiedliche Abmessungen und / oder Formen, zum Beispiel längliche oder ovale Formen, habe, je nach der gewünschten Einschränkung der Bewegung. In Abhängigkeit der Abmessungen und / oder Form des Rücksprungs 32 ist der darin aufgenommene Fortsatz 31 in seiner Bewegung eingeschränkt, zum Beispiel kontaktiert er eine Seitenwand des Rücksprungs 32 und / oder wird durch die Seitenwand des Rücksprungs 32 geführt, wodurch dem Rücksprung 32, dem zweiten Getriebeelement 17, der Werkzeuganschlussvorrichtung 11 oder dem Werkzeugs 12 ein vorbestimmter Bewegungsverlauf aufzwingbar ist.

Die Werkzeuganschlussvorrichtung 11 umfasst einen länglichen Schaft 33, der einteilig mit dem zweiten Getriebeelement 17 ausgebildet ist. Der Schaft 33 ist als Vollschaft mit einem oder mehreren Befestigungselementen, zum Beispiel Rücksprüngen oder Vorsprüngen, an seiner Oberfläche ausgebildet, so dass das Werkzeug 12 zuverlässig, jedoch lösbar mit dem Winkelstück 1-6, 40 verbindbar ist.

In den Figuren 3, 4, 12 ist schließlich noch ein Anschlagelement 36 an der Antriebswelle 8 zu erkennen. Das Anschlagelement 36 ist insbesondere als ringförmiger, die Antriebswelle 8 umgebender Flansch ausgebildet. Das Anschlagelement 36 ist vorzugsweise zum axialen Positionieren der Antriebswelle 8 in dem Winkelstück 1-6, 40 und / oder als Teil einer Vorrichtung zum Vorspannen der Antriebswelle 8 in Richtung der Getriebevorrichtung 15 vorgesehen.

Die mechanische Getriebevorrichtung 15 der Winkelstücke 1-6 gemäß den Figuren 2-11 umfasst jeweils ein Exzentergetriebe. Im Folgenden werden jene Merkmale der Exzentergetriebe beschrieben, die bei den Winkelstücken 1-6 übereinstimmen.

Die als Exzentergetriebe ausgebildete Getriebevorrichtung 15 umfasst ein erstes, exzentrisch zur Längsachse 9 angeordnetes Getriebeelement 16 an einem Ende der Antriebswelle 8 und ein zweites Getriebeelement 17, das mit der Werkzeuganschlussvorrichtung 11 verbunden ist. Das erste, exzentrisch zur Längsachse 9 angeordnete Getriebeelement 16 ist auf einer kreisförmigen Bahn um die Längsachse 9 bewegbar, wenn die Antriebswelle 8 rotiert. Das zweite Getriebeelement 17 hat eine Kontaktfläche 17A, an der die beiden Getriebeelemente 16, 17 einander zur Übertragung der Antriebsbewegung kontaktieren.

Die Kontaktfläche 17A des zweiten Getriebeelements 17 ist zur Übertragung der Antriebsbewegung auf die Werkzeuganschlussvorrichtung 11 verschwenkbar in dem distalen Endbereich 10 gelagert, insbesondere verschwenkbar um die Referenzachse 24 (siehe Figur 4) gelagert. Die Kontaktfläche 17A ist des Weiteren zur Übertragung der Antriebsbewegung auf die Werkzeuganschlussvorrichtung 11 in dem distalen Endbereich 10 schwenkbar oder drehbar um die Mittelachse 13 der Werkzeuganschlussvorrichtung 11 gelagert. Diese schwenkbare Lagerung der Kontaktfläche 17A bzw. des zweiten Getriebeelements 17 um die beiden Achsen 13, 24 ermöglicht eine taumelnde oder wobbelnde Bewegung der Kontaktfläche 17A in der Außenhülse 7, die durch den Kontakt zwischen den beiden Getriebeelementen 16, 17 und der Übertragung der Antriebsbewegung von dem ersten Getriebeelement 16 auf das zweite Getriebeelement 17 bewirkt ist.

Wenn die Antriebswelle 8 rotiert, bewegt sich das erste Getriebeelement 16 aufgrund seiner kreisförmigen Bewegung um die Längsachse 9 der Antriebswelle 8 des Weiteren auch auf einer Kreisbahn 18 auf der Kontaktfläche 17A des zweiten Getriebeelements 17 oder definiert die Kreisbahn 18 auf der Kontaktfläche 17A (siehe Figur 6). Aufgrund des Kontaktes der beiden Getriebeelemente (16, 17) zur Übertragung der Antriebsbewegung und der dadurch bewirkten Schwenkung der Kontaktfläche 17A und / oder des zweiten Getriebeelements 17 und der daraus resultierenden taumelnden Bewegung der Kontaktfläche 17A verändert sich die (aktuelle) Entfernung zwischen der Kontaktfläche 17A und der Antriebswelle 8, insbesondere von einzelnen Punkten auf der Kreisbahn 18, während des Betriebs der Getriebevorrichtung 15 beständig. Insbesondere ist das erste, exzentrische Getriebeelement 16 ausgebildet, die Kontaktfläche 17A oder das zweite Getriebeelement 17 aufgrund des Kontaktes zwischen den beiden Getriebeelementen 16, 17 zu bewegen oder zu verdrängen, wodurch die taumelnde Bewegung und die sich verändernde Entfernung bewirkt werden.

Die unterschiedlichen Entfernungen unterschiedlicher Punkte auf der Kreisbahn 18 ist schematisch in der Figur 6 dargestellt: hierbei ist die kürzeste Entfernung 19 zwischen einem auf der Kreisbahn 18 angeordneten ersten Punkt 20, an dem besonders bevorzugt das zweite Getriebeelement 17 das erste Getriebeelement 16 zur Übertragung der Antriebsbewegung (aktuell) kontaktiert, und einer die Längsachse 9 der Antriebswelle 8 innerhalb der axialen Ausdehnung der Antriebswelle 8 im rechten Winkel schneidenden Referenzebene 21 (siehe auch Figur 4) größer als die kürzeste Entfernung 22 zwischen einem auf der Kreisbahn 18 angeordneten, dem ersten Punkt 20 gegenüberliegenden zweiten Punkt 23 und der Referenzebene 21.

Aufgrund der Drehung des ersten Getriebeelements 16 um die Längsachse 9 und relativ zu der Kontaktfläche 17A bewegt sich das erste Getriebeelement 16 entlang der Kreisbahn 18, wodurch auch die Punkte 20, 23 auf der Kreisbahn wandern und die Kontaktfläche 17A und / oder das zweite Getriebeelement 17 in die taumelnde Bewegung versetzt wird / werden, so dass die im Vorstehenden beschriebenen Verhältnisse der Entfernungen zwischen den Punkten 20, 23 und der Referenzebene 21 im Wesentlichen gleich bleiben.

Insbesondere aus den Figuren 5, 7 und 8 ist zu erkennen, dass das erste Getriebeelement 16 eine Exzenterfläche 16A aufweist, die durch eine vorderste, der Mittelachse 13 der Werkzeuganschlussvorrichtung 11 unmittelbar zugewandte Endfläche des ersten Getriebeelements 16 gebildet ist. Diese vorderste Exzenterfläche 16A, insbesondere ausschließlich diese vorderste Exzenterfläche 16A, kontaktiert die Kontaktfläche 17A des zweiten Getriebeelements 17, um die Antriebsbewegung auf die Kontaktfläche 17A des zweiten Getriebeelements 17 und die Werkzeuganschlussvorrichtung 11 zu übertragen.

Das zweite Getriebeelement 17 umfasst neben der Kontaktfläche 17A den als Kugelkalotte ausgebildeten Lagerabschnitt 25, der mit der Kontaktfläche 17A verbunden ist. Der Lagerabschnitt 25 ist derart ausgebildet, dass das zweite Getriebeelement 17 oder die Kontaktfläche 17A in dem Winkelstück 1-6 verschwenkbar sind, wodurch wiederum die taumelnde Bewegung der Kontaktfläche 17A, des zweiten Getriebeelements 17, der Werkzeuganschlussvorrichtung 11 und / oder des Werkzeugs 12 ermöglicht wird. Wenn der Lagerabschnitt 25 in dem gebogenen Aufnahmeabschnitt 26 aufgenommen ist, bilden diese beiden Elemente 25, 26 ein Gleitlager 27 zur Lagerung der Kontaktfläche 17A, des zweiten Getriebeelements 17, der Werkzeuganschlussvorrichtung 11 und / oder des Werkzeugs 12.

Im Folgenden werden jene Merkmale, welche die Ausführungsbeispiele der Figuren 2-11 voneinander unterscheiden, beschrieben. Diese unterschiedlichen Merkmale betreffen vor allem die Ausgestaltung oder Formung der beiden Getriebeelemente 16, 17 der Exzentergetriebe bzw. der Exzenterfläche 16A und der Kontaktfläche 17A:
Die Ausführungsbeispiele der Figuren 3-5, 7 und 9 weisen als erstes Getriebeelement 16 oder als Exzenterfläche 16A jeweils eine schiefe Ebene 16C oder ein keilförmiges Exzenterelement mit einer schiefen Ebene 16C auf. Die schiefe Ebene 16C ist in Richtung der Mittelachse 13 der Werkzeuganschlussvorrichtung 11 geneigt. Alternativ ist die schiefe Ebene 16C relativ zur Längsachse 9 der Antriebswelle 8 mit einem Winkel ungleich 90° geneigt, zum Beispiel mit einem Winkel im Bereich von 92° - 97°. Zumindest jener Punkt oder Abschnitt der schiefen Ebene 16C, der am weitesten in Richtung des zweiten Getriebeelements 17 ragt, kontaktiert die Kontaktfläche 17A des zweiten Getriebeelements 17, um die Antriebsbewegung auf das zweite Getriebeelement 17 zu übertragen. Alternativ ist es natürlich auch möglich, dass die schiefe Ebene 16C auf ihrer gesamten Fläche von der Kontaktfläche 17A kontaktiert ist, so dass insbesondere die schiefe Ebene 16C vollständig von der Kontaktfläche 17A bedeckt ist (siehe Figur 3 und vorstehende Beschreibung).

In der Figur 8 umfasst das erste Getriebeelement 16 einen Fortsatz oder Stift 16B. Die Exzenterfläche 16A, welche die Kontaktfläche 17A des zweiten Getriebeelements 17 kontaktiert, um die Antriebsbewegung auf das zweite Getriebeelement 17 zu übertragen, ist durch die vorderste, der Mittelachse 13 der Werkzeuganschlussvorrichtung 11 zugewandte, freie Endfläche des Stifts 16 gebildet.

In den Ausführungsbeispielen der Figuren 3-5 umfasst das zweite Getriebeelement 17 oder die Kontaktfläche 17A eine ebene Fläche 17B. Alternativ, siehe Figuren 7, 8, kann das zweite Getriebeelement 17 oder die Kontaktfläche 17A auch gebogen ausgebildet sein, zum Beispiel konvex in Richtung der Antriebswelle 8, und dem gemäß eine gebogene, konvexe Fläche 17C aufweisen.

Ein weiteres, alternatives Ausführungsbeispiel ist in der Figur 9 dargestellt: dort umfasst das zweite Getriebeelement 17 einen Stift oder einen Fortsatz 17D, dessen freie, der Antriebswelle zugeordnete Endfläche die Kontaktfläche 17A bildet Gemäß diesem Ausführungsbeispiel ist es vorteilhaft, das zweite Getriebeelement 17 oder die Kontaktfläche 17A durch zumindest ein Federelement 37 in Richtung des ersten Getriebeelements 16 vorzuspannen, um einen zuverlässigen Kontakt zwischen der Kontaktfläche 17A und der Exzenterfläche 16A zu gewährleisten.

Die Figuren 10, 11 zeigen zwei mögliche Bewegungsbahnen, in welche die Werkzeuganschlussvorrichtung 11 und / oder das Werkzeug 12 durch die Getriebevorrichtung 15 versetzbar sind. Selbstverständlich sind auch andere als die beiden dargestellten Bewegungsbahnen durch die Getriebevorrichtung 15 erzeugbar. Die unterschiedlichen Bewegungsbahnen sind insbesondere durch unterschiedliche Ausformungen des ersten und / oder zweiten Getriebeelements 16, 17 und / oder der Vorrichtung 30 zum Einschränken der Bewegung erzielbar, so wie dies beispielhaft im Vorstehenden beschrieben ist.

Die Bewegungsbahnen 38, 39 der Figuren 10, 11 haben (unter Vernachlässigung der Formung der Bewegungsbahn 38 in Richtung des Winkelstücks 1-6 durch den von der Getriebevorrichtung 15 erzeugten Hub des Werkzeugs 12) eine im Wesentlichen ovale oder elliptische Form. Gemäß dem Ausführungsbeispiel der Figur 10 erstreckt sich die längere Hauptachse der Ellipse 38 longitudinal zur Längsachse 9 der Antriebswelle, so dass die Hauptbewegung des Werkzeugs 12 eine Vorwärts-Rückwärtsbewegung ist. Im Gegensatz dazu erstreckt sich die längere Hauptachse der Ellipse 39 der Figur 11 quer zur Längsachse 9 der Antriebswelle, so dass die Hauptbewegung des Werkzeugs 12 eine seitliche Bewegung ist.

Im Folgenden sind jene Merkmale des Winkelstücks 40 gemäß der Figur 12 beschrieben, die dieses Winkelstück 40 von den im Vorstehenden beschriebenen Winkelstücken 1-6 unterscheiden.

Das erste Getriebeelement 16 der mechanischen Getriebevorrichtung 15 des Winkelstücks 40 umfasst ein (räumliches, dreidimensionales) Gleichdick(element) 41, d.h. einen Rotationskörper konstanter Breite. Das Gleichdick 41 umfasst eine ungerade Anzahl von zumindest drei (in Richtung der Außenhülse 7) konvex gebogenen Seitenflächen 43, die einander an Scheitelpunkten oder Scheitelkanten treffen oder durch Verbindungsflächen 44 miteinander verbunden sind.

Das Gleichdick 41 ist an einer Endfläche der Antriebswelle 8 angeordnet, vorzugsweise einteilig mit der Antriebswelle 8 ausgebildet. Das Gleichdick 41 ist insbesondere zentrisch an der Endfläche der Antriebswelle 8 und / oder konzentrisch mit der Antriebswelle 8 um deren Längsachse 9 angeordnet.

Das zweite Getriebeelement 17 der mechanischen Getriebevorrichtung 15 des Winkelstücks 40 umfasst einen Rücksprung oder eine Aufnahme 42, in welche(n) das Gleichdick 41 bei Betrieb aufgenommen ist. Die Aufnahme 42 weist insbesondere eine längliche oder ovale Form auf. In oder an der Aufnahme 42, insbesondere an deren Innenwand, sind vorzugsweise zumindest zwei einander gegenüberliegende Kontaktflächen 45 vorgesehen. Alternativ sind vier Kontaktflächen 45 vorgesehen, nämlich jeweils eine Kontaktfläche 45 oben, unten, links und rechts an der Innenwand der Aufnahme 42.

Bei Betrieb des Winkelstücks 40 sind die Antriebswelle 8 und das Gleichdick 41 in Rotation versetzt, wobei das in der Aufnahme 42 aufgenommene Gleichdick 41, insbesondere dessen Flächen 43, 44, abwechselnd die gegenüberliegenden Kontaktflächen 45 kontaktiert und dadurch die Werkzeuganschlussvorrichtung 11 in eine Vor-Zurück- oder Pendelbewegung, zum Beispiel in Richtung der Längsachse 9 der Antriebswelle 8, auf einem Kreisbogen versetzen.

Im Vergleich zu den im Vorstehenden beschriebenen Exzentergetrieben bewegt sich eine mit einem Gleichdick 41 angetriebene Werkzeuganschlussvorrichtung 11 und / oder ein damit verbundenes Werkzeug 12 mit einer höheren Frequenz.

Es wird darauf verwiesen, dass einzelne oder alle Merkmale unterschiedlicher beschriebener Ausführungsbeispiele miteinander kombinierbar sind.

## Patentansprüche

1. Medizinisches oder dentales Winkelstück (1-6, 40), umfassend: eine längliche Außenhülse (7), eine drehbar in der Außenhülse (7) gelagerte Antriebswelle (8), die sich entlang einer Längsachse (9) erstreckt, eine in einem distalen Endbereich (10) der länglichen Außenhülse (7) beweglich angeordnete Werkzeuganschlussvorrichtung (11) zum lösbaren Verbinden eines Werkzeugs (12) mit dem medizinischen oder dentalen Winkelstück (1-6, 40), wobei die Werkzeuganschlussvorrichtung (11) eine Mittelachse (13) aufweist, die gewinkelt zur Längsachse (9) der Antriebswelle (8) angeordnet ist, eine Werkzeugöffnung (14) im distalen Endbereich (10) der länglichen Außenhülse (7), durch die sich die Werkzeuganschlussvorrichtung (11) oder ein damit verbindbares Werkzeug (12) erstreckt, und eine mechanische Getriebevorrichtung (15), welche die Antriebswelle (8) und die Werkzeuganschlussvorrichtung (11) mechanisch verbindet und die ausgebildet ist, eine von der Antriebswelle (8) zur Verfügung gestellte Antriebsbewegung auf die Werkzeuganschlussvorrichtung (11) zu übertragen, wobei die Getriebevorrichtung (15) ein erstes Getriebeelement (16) an einem Ende der Antriebswelle (8) und ein zweites Getriebeelement (17), das mit der Werkzeuganschlussvorrichtung (11) verbunden ist, umfasst, **dadurch gekennzeichnet, dass**
das mit der Werkzeuganschlussvorrichtung (11) verbundene zweite Getriebeelement (17) einen als Kugelkalotte ausgebildeten Lagerabschnitt (25) aufweist, der in einem gebogenen Aufnahmeabschnitt (26) in der länglichen Außenhülse (7) gelagert ist, so dass der gebogene Aufnahmeabschnitt (26) und der als Kugelkalotte ausgebildete Lagerabschnitt (25) ein Gleitlager (27) bilden.

2. Medizinisches oder dentales Winkelstück (1-6, 40), umfassend: eine längliche Außenhülse (7), eine drehbar in der Außenhülse (7) gelagerte Antriebswelle (8), die sich entlang einer Längsachse (9) erstreckt, eine in einem distalen Endbereich (10) der länglichen Außenhülse (7) beweglich angeordnete Werkzeuganschlussvorrichtung (11) zum lösbaren Verbinden eines Werkzeugs (12) mit dem medizinischen oder dentalen Winkelstück (1-6, 40), wobei die Werkzeuganschlussvorrichtung (11) eine Mittelachse (13) aufweist, die gewinkelt zur Längsachse (9) der Antriebswelle (8) angeordnet ist, eine Werkzeugöffnung (14) im distalen Endbereich (10) der länglichen Außenhülse (7), durch die sich die Werkzeuganschlussvorrichtung (11) oder ein damit verbindbares Werkzeug (12) erstreckt, und eine mechanische Getriebevorrichtung (15), welche die Antriebswelle (8) und die Werkzeuganschlussvorrichtung (11) mechanisch verbindet und die ausgebildet ist, eine von der Antriebswelle (8) zur Verfügung gestellte Antriebsbewegung auf die Werkzeuganschlussvorrichtung (11) zu übertragen, wobei die Getriebevorrichtung (15) ein erstes Getriebeelement (16) an einem Ende der Antriebswelle (8) und ein zweites Getriebeelement (17), das mit der Werkzeuganschlussvorrichtung (11) verbunden ist, umfasst, **dadurch gekennzeichnet, dass**
das zweites Getriebeelement (17) zur Übertragung der Antriebsbewegung auf die Werkzeuganschlussvorrichtung (11) in der länglichen Außenhülse (7) verschwenkbar um eine Referenzachse (24) gelagert ist, die sich rechtwinkelig zur Mittelachse (13) der Werkzeuganschlussvorrichtung (11) und zur Längsachse (9) der Antriebswelle (8) erstreckt.

3. Medizinisches oder dentales Winkelstück (1-6, 40), nach Anspruch 1 oder 2, **dadurch gekennzeichnet, dass**
die Getriebevorrichtung (15) ein Exzentergetriebe (16, 16A, 17,17A) aufweist.

4. Medizinisches oder dentales Winkelstück (1-6, 40), nach Anspruch 1 oder 2, **dadurch gekennzeichnet, dass**
die Getriebevorrichtung (15) ein Gleichdick (41) aufweist.

5. Medizinisches oder dentales Winkelstück (1-6, 40) nach einem der vorherstehenden Ansprüche, **dadurch gekennzeichnet, dass**
das zweite Getriebeelement (17) zur Übertragung der Antriebsbewegung auf die Werkzeuganschlussvorrichtung (11) in der länglichen Außenhülse (7), insbesondere in dem gebogenen Aufnahmeabschnitt (26), schwenkbar um die Mittelachse (13) der Werkzeuganschlussvorrichtung (11) und / oder um die Längsachse (9) der Antriebswelle (8) gelagert ist.

6. Medizinisches oder dentales Winkelstück (1-6, 40) nach einem der Ansprüche 3, 5 oder 6, **dadurch gekennzeichnet, dass**
das erste Getriebeelement (16) exzentrisch zur Längsachse (9) der Antriebswelle (8) angeordnet ist und einen Stift (16B), einen Fortsatz, einen Keil oder eine schiefe Ebene (16C), die in einem Winkel ungleich 90° zur Längsachse (9) der Antriebswelle (8) angeordnet ist, aufweist.

7. Medizinisches oder dentales Winkelstück (1-6, 40) nach einem der vorherstehenden Ansprüche, **dadurch gekennzeichnet, dass**
das zweite Getriebeelement (17) eine ebene Fläche (17B), eine gebogene Fläche, eine konkav oder konvex in Richtung der Antriebswelle (8) geformte Fläche (17C), einen Stift, einen Fortsatz (17D), eine Aufnahme oder einen Rücksprung (42) aufweist.

8. Medizinisches oder dentales Winkelstück (1-6, 40) nach einem der vorstehenden Ansprüche, **dadurch gekennzeichnet, dass**
der gebogene Aufnahmeabschnitt (26) an einer Innenseite des distalen Endbereichs (10) der länglichen Außenhülse (7) vorgesehen ist oder durch eine Innenseite des distalen Endbereichs (10) der länglichen Außenhülse (7) gebildet ist.

9. Medizinisches oder dentales Winkelstück (1-6, 40) nach einem der vorherstehenden Ansprüche, **dadurch gekennzeichnet, dass**
zumindest ein Abschnitt der Antriebswelle (8) eine sich entlang der Längsachse (9) erstreckende Bohrung (28) aufweist, so dass ein Medium, insbesondere ein Schmiermittel, durch die Bohrung (28) in Richtung des distalen Endbereichs (10) der länglichen Außenhülse (7), insbesondere zu der Getriebevorrichtung (15), förderbar ist.

10. Medizinisches oder dentales Winkelstück (1-6, 40) nach Anspruch 9, **dadurch gekennzeichnet, dass**
die Bohrung (28) der Antriebswelle (8) in eine Öffnung (29) mündet, die an einer dem zweiten Getriebeelement (17) zugewandten Endfläche der Antriebswelle (8) oder an dem ersten Getriebeelement (16) vorgesehen ist.

11. Medizinisches oder dentales Winkelstück (1-6, 40) nach einem der vorherstehenden Ansprüche, **gekennzeichnet durch**
eine mit dem zweiten Getriebeelement (17) verbundene Vorrichtung (30) zum Einschränken der Bewegung eines mit dem Winkelstück (1-6, 40) verbundenen Werkzeugs (12) oder der Werkzeuganschlussvorrichtung (11).

12. Medizinisches oder dentales Winkelstück (1-6, 40) nach Anspruch 11, **dadurch gekennzeichnet, dass**
die Vorrichtung (30) zum Einschränken der Bewegung eines mit dem Winkelstück (1-6, 40) verbundenen Werkzeugs (12) oder der Werkzeuganschlussvorrichtung (11) einen Fortsatz (31) aufweist, der in einen Rücksprung (32) eines in Bezug auf das zweite Getriebeelement (17) feststehendes Bauteil eingreift.

13. Medizinisches oder dentales Winkelstück (1-6, 40) nach einem der vorherstehenden Ansprüche, **dadurch gekennzeichnet, dass**
die Werkzeuganschlussvorrichtung (11) einen länglichen Schaft (33) aufweist, der einteilig mit dem zweiten Getriebeelement (17) ausgebildet ist.

14. Medizinisches oder dentales Winkelstück (1-6, 40) nach einem der vorherstehenden Ansprüche, **dadurch gekennzeichnet, dass**
die Antriebswelle (8) in Richtung der Getriebevorrichtung (15), insbesondere des zweiten Getriebeelements (17), vorgespannt ist.

15. Medizinisches oder dentales Winkelstück (1-6, 40) nach einem der vorherstehenden Ansprüche, **dadurch gekennzeichnet, dass**
die Werkzeuganschlussvorrichtung einen länglichen Schaft umfasst, der insbesondere einteilig mit dem zweiten Getriebeelement ausgebildet ist.
